# DEMANDE DE BREVET EUROPEEN

(11) **EP 3 889 550 A1**
(43) Date de publication de la demande: **06.10.2021**
(21) Numéro de dépôt: 21165624.4
(22) Date de dépôt: 29.03.2021
(51) Int. Cl.: G01D 21/02

(54) **DISPOSITIF D ÉCHANTILLONNAGE DE DONNÉES ET ENSEMBLE DE DIAGNOSTIC POUR UN VÉHICULE AUTOMOBILE**

(30) Priorité: 31.03.2020 FR 2003186; 31.03.2020 RO 202000169
(71) Demandeur: RENAULT s.a.s., 92100 Boulogne-Billancourt (FR)
(72) Inventeur: GAGNIUC, Paul, Bucuresti (RO)

(57) **Abrégé**

Dispositif (2) d'échantillonnage des données d'une pluralité de capteurs (6) d'un véhicule automobile (1), comprenant une boîte dans lequel est monté un afficheur lumineux comprenant une matrice d'éléments lumineux, chaque élément lumineux dudit afficheur lumineux étant adapté pour être associé à un capteur (6) du véhicule automobile (1); le dispositif (2) comprenant en outre une caméra installée de sorte à acquérir en temps-réel l'image dudit afficheur lumineux installé dans la boîte.

## Description

L'invention concerne le domaine du diagnostic électronique des véhicules automobiles.

Les véhicules automobiles modernes comprennent un grand nombre de capteurs facilitant le diagnostic de pannes ou de défauts de fonctionnement.

Il est bien connu qu'un capteur est un organe mesurant une grandeur physique donnée, température, pression, accélération etc. et la convertie en un signal électrique de sortie, généralement de sorte que la tension de sortie permette d'interpréter la grandeur mesurée.

Or, plus le nombre de capteurs est grand dans un véhicule automobile, plus le processus général de diagnostic est rendu complexe et plus le temps d'acquisition est important pour les dispositifs de diagnostic.

L'automatisation grandissante des véhicules automobile augure par ailleurs d'une forte augmentation de la quantité de capteurs embarqués dans un véhicule automobile.

Aussi, il existe le besoin d'optimiser le flux d'échantillonnage des données émises par les capteurs d'un véhicule automobile.

On connaît notamment dans l'art antérieur des solutions basées sur le multiplexage des signaux émis par les capteurs, permettant de connecter un grand nombre de capteurs à un calculateur. Toutefois de telles solutions, sérielles par définition, imposent une durée d'échantillonnage inversement proportionnelle au nombre de capteurs, et ne permettent pas une acquisition simultanée de tous les capteurs.

Aussi, il existe le besoin d'une solution pour acquérir de manière plus efficace et en parallèle les données d'une pluralité de capteurs.

À cet effet, on propose un dispositif d'échantillonnage des données d'une pluralité de capteurs d'un véhicule automobile, comprenant une boîte dans lequel est monté un afficheur lumineux comprenant une matrice d'éléments lumineux, chaque élément lumineux dudit afficheur lumineux étant adapté pour être associé à un capteur du véhicule automobile ; le dispositif comprenant en outre une caméra installée de sorte à acquérir en temps-réel l'image dudit afficheur lumineux installé dans la boîte. Ainsi on peut acquérir simultanément, en parallèle, l'ensemble des capteurs associé au dispositif, à une fréquence déterminée par la caméra d'acquisition, et ce de manière relativement simple et peu coûteuse.

Avantageusement et de manière non limitative, chaque élément lumineux comprend une diode électroluminescente commandée en tension ou en courant en fonction respectivement de la valeur de tension ou de courant de sortie dudit capteur associé. En d'autres termes l'afficheur lumineux est une matrice de LED, ce qui est une solution particulièrement fiable, peu coûteuse et relativement simple à commander LED par LED.

Avantageusement et de manière non limitative, ladite boîte est formée de deux parties amovibles l'une par rapport à l'autre, une première partie comprenant l'afficheur lumineux et l'autre partie comprenant la caméra. Ainsi, lorsqu'un tel dispositif est installé pour diagnostiquer un véhicule, on peut embarquer dans le véhicule la première partie du boîtier et déporter la deuxième partie dans un système externe au véhicule.

Avantageusement et de manière non limitative, le dispositif comprend en outre un organe d'adaptation apte à adapter, pour chaque capteur, la tension ou le courant de sortie du capteur à une plage de tension attendue pour l'élément lumineux associé de l'afficheur lumineux. Ainsi, on peut normaliser les valeurs de sortie des capteurs pour assurer un affichage optimal sur l'afficheur lumineux et améliorer la reconnaissance ultérieure de patterns d'affichage.

Avantageusement et de manière non limitative, chaque capteur est associé à une pluralité d'éléments lumineux. Ainsi, on peut améliorer l'acquisition de chaque valeur de capteur par la caméra en grossissant par exemple la taille unitaire d'une valeur convertie de capteur en l'affichant sur une pluralité de pixels de l'afficheur lumineux.

L'invention concerne aussi un ensemble de diagnostic d'un véhicule automobile, comprenant un dispositif tel que décrit précédemment, et un organe de traitement apte à recevoir en temps-réel l'image dudit afficheur lumineux acquise par ladite caméra et à reconnaître un pattern de diagnostic dans ladite image reçue.

Avantageusement et de manière non limitative, l'organe de traitement comprend des moyens d'apprentissage automatique, tel qu'un réseau de neurone. Ainsi, on peut obtenir un diagnostic du véhicule sans qu'il ne soit nécessaire d'effectuer une analyse capteur par capteur et ce de manière fiable, même pour les diagnostics complexes impliquant un nombre relativement important de capteurs.

Avantageusement et de manière non limitative, l'ensemble de diagnostic comprend en outre un afficheur de diagnostic apte à recevoir de l'organe de traitement le diagnostic déterminé et à l'afficher. Ceci permet à un opérateur ou au conducteur du véhicule automobile de prendre connaissance, en temps réel du diagnostic ou de l'état du véhicule automobile.

L'invention porte aussi sur l'utilisation d'un ensemble de diagnostic tel que décrit précédemment sur un véhicule automobile.
La figure 1 est une représentation schématique d'un ensemble de diagnostic selon l'invention ;
La figure 2 est une représentation schématique du dispositif de diagnostic selon un premier mode de réalisation et d'un afficheur de diagnostic ;
La figure 3 est une autre représentation schématique du dispositif selon le mode de réalisation de la figure 2 ;
La figure 4 est une représentation schématique d'un ensemble de diagnostic selon un mode de réalisation particulier de l'invention ; et
La figure 5 est une représentation schématique d'un ensemble de diagnostic selon un autre mode de réalisation particulier de l'invention.

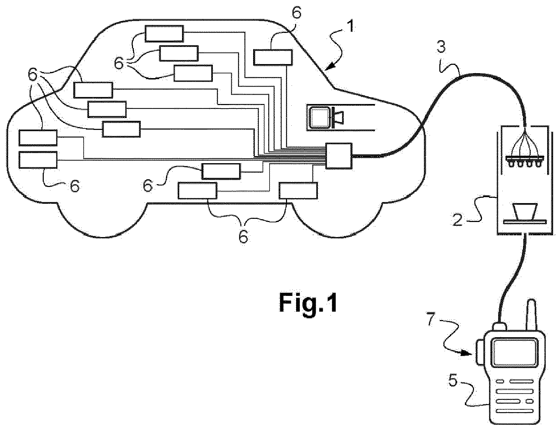

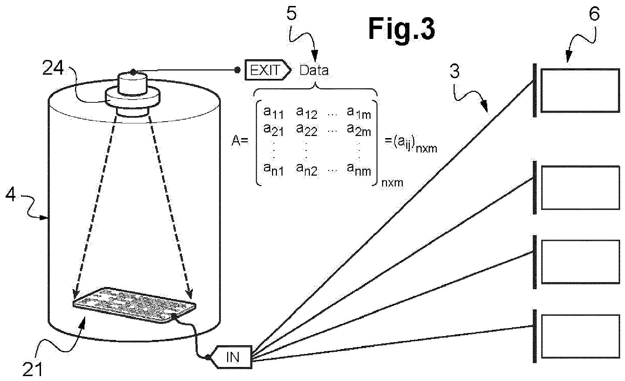

En référence aux figures 1 à 3, selon un premier mode de réalisation de l'invention, un véhicule automobile 1 comprend une pluralité de capteurs 6, installés en une pluralité d'endroits.

L'invention est adaptée à tout type de capteurs 6 aptes à acquérir ou mesurer une grandeur physique, telle qu'une force, une température, une accélération, des vibrations, une déformation ou toute autre grandeur donnée à titre non limitatif.

Chaque capteur 6 est connecté à un dispositif d'échantillonnage des données 2 selon l'invention, aussi appelé plus simplement dispositif 2.

Dans ce mode de réalisation chaque capteur 6 est relié de manière filaire au dispositif 2, de sorte qu'au voisinage du boîtier l'ensemble de câbles forme une nappe 3, ce qui assure une transmission optimale des données de chaque capteur au dispositif 2.

Toutefois on pourrait prévoir une transmission sans-fil des mesures de chaque capteur 6 au dispositif 2, par exemple par ondes radioélectriques, mais une telle solution implique une plus grande consommation énergétique et une plus grande sensibilité aux perturbations du système.

Le dispositif d'échantillonnage des données 2 comprend une boîte opaque 4, aussi appelée boîtier 4, dans laquelle sont installés un afficheur lumineux 21 et une caméra 24.

L'afficheur lumineux 21 est monté sur une carte de circuit imprimé 22, en anglais *Printed Circuit Board* fréquemment abrégé en PCB.

L'afficheur lumineux 21 comprend une pluralité d'éléments lumineux 210, tels que des diodes électroluminescentes, plus couramment appelées LED, formant une matrice d'affichage. Cependant tout type d'afficheur lumineux, formé d'une matrice d'affichage apte à afficher indépendamment des pixels lumineux peut être mis en oeuvre par l'invention. Le choix de la matrice LED est principalement basé sur la grande fiabilité, la simplicité d'implémentation ainsi que son faible coût.

L'afficheur lumineux 21 comprend ainsi une matrice de LED 210 formant autant de pixels d'affichage distincts.

Chaque capteur 6 est alors associé à un pixel de l'afficheur lumineux 21 de sorte que la tension de sortie du capteur 6 soit représentée visuellement par le pixel, en particulier en codant, selon un procédé bijectif, la valeur de tension de sortie en un signal d'affichage lumineux de la LED, par exemple de sorte à moduler la luminosité de chaque pixel en fonction de la valeur de sortie du capteur 6 associé.

Bien qu'on associe dans ce mode de réalisation le capteur 6 à une tension de sortie, tout autre type de valeur de sortie du capteur 6 peut être affichée, telle qu'un courant de sortie.

Selon une alternative de mise en œuvre, l'afficheur 21 comprend une matrice polychrome et la valeur de sortie de chaque capteur 6 est convertie en une couleur d'affichage.

Notamment, une tension peut être convertie en une valeur RGB de sorte que chaque pixel de la matrice de l'afficheur 21 définisse une couleur d'affichage représentatif de la tension de sortie du capteur 6 associé.

Toutefois l'invention n'est pas limitée à cette seule mise en œuvre de l'association capteur 6/afficheur lumineux 21, et toute solution peut être mise en œuvre pour que l'afficheur affiche une image formant une matrice de pixels fonction des valeurs des sorties de capteurs 6.

En particulier selon des modes de réalisation particuliers, chaque valeur de sortie d'un capteur 6 peut être codée sur plusieurs pixels de l'afficheur 21, notamment lorsque que le capteur 6 fournit une pluralité de données de sortie.

En outre chaque capteur 6 peut être associé à un groupe de pixel, notamment un groupe carré ou rectangulaire de pixel, de sorte à agrandir la zone de représentation visuelle de chaque capteur sur l'afficheur lumineux 21. Ceci est particulièrement pertinent lorsque la résolution d'affichage de l'afficheur lumineux 21 est proche ou supérieure de la résolution d'acquisition de la caméra 24. Dans ce cas le risque que la caméra 24 ne capte pas parfaitement chaque pixel associé à chaque capteur 6 existe, et il peut être alors utile d'effectuer un agrandissement de l'affichage de chaque représentation visuelle de chaque capteur, autrement dit une diminution volontaire de la résolution d'affichage, selon une technique appelée « downscaling » en anglais.

En conséquence, on peut déterminer une résolution optimale d'affichage sur l'afficheur lumineux 21, en considérant chaque représentation de capteur 6 à afficher comme étant un pixel d'affichage, et en calculant une résolution d'affichage voulue, non nécessairement égale à la résolution d'affichage de l'afficheur lumineux 21.

Le nombre de capteurs 6 pouvant être acquis en parallèle est alors limitée par la capacité d'affichage de l'afficheur lumineux 21 ainsi que la résolution d'acquisition de la caméra 24.

À contrario, s'il est nécessaire d'acquérir un grand nombre de capteurs 6 (par exemple plusieurs milliers), une caméra à haute résolution sera nécessaire pour s'assurer que la résolution d'affichage puisse être correctement acquise.

À l'opposé de l'afficheur lumineux 21 dans la boîte 4, on installe une caméra 24 pour acquérir une image de l'afficheur lumineux 21. Cette caméra 24 est installée de sorte qu'elle acquiert de manière nette l'image de l'afficheur lumineux 21 en temps réel.

Dans ce mode de réalisation l'afficheur lumineux 21 est amovible du reste de la boîte 4. L'afficheur 21 est alors solidaire de la nappe de câbles de transmission 3 des données de capteurs 6, et est embarqué par le véhicule. Le reste du dispositif 2 forme alors équipement d'acquisition qui peut être connecté à l'afficheur 21 lorsqu'un diagnostic doit être réalisé.

Ainsi, le boîtier 4 présente une première partie 4a formant partie d'acquisition du dispositif 2, et comprenant la caméra 24, et une seconde partie 4b formant partie d'émission lumineuse, comprenant l'afficheur lumineux 21.

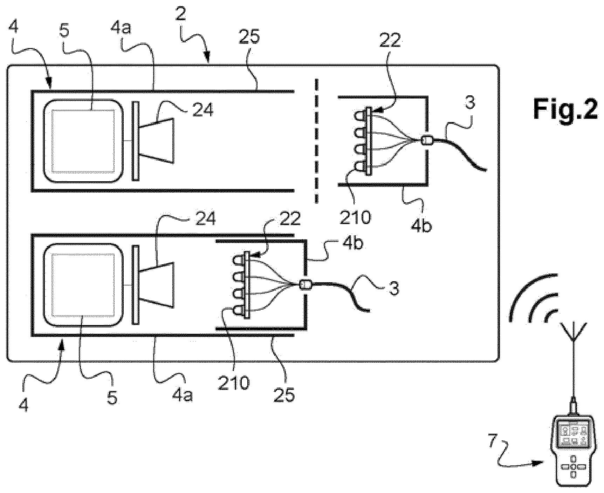

Les deux parties 4a et 4b sont conformées pour pouvoir se fixer de manière amovible l'une à l'autre de sorte à former un boîtier 4 opaque, selon toute technique connue de fixation. La figure 2 illustre les deux parties 4a et 4b séparées l'une de l'autre sur la représentation du haut et fixées l'une à l'autre sur la représentation du bas.

La caméra 24 transmet alors les images acquises à un organe de traitement 5.

Ainsi la fréquence de traitement des données des capteurs est déterminée par la fréquence d'acquisition de la caméra 24.

Dans la représentation de la figure 2, l'organe de traitement 5 est représenté dans la boîte 4, mais ceci ne constitue qu'une possibilité possible de positionnement de l'organe de traitement 5, et il est tout autant possible d'installer cet organe de traitement 5 à l'extérieur de la boîte opaque.

L'organe de traitement 5 est dans ce mode de réalisation, un calculateur 5 embarqué apte à traiter l'image acquise pour en extraire les données associées à chaque capteur de sorte à réaliser un diagnostic du véhicule automobile.

Le calculateur 5 peut également utiliser ces données en temps réel pendant un roulage véhicule à des fins d'information au conducteur, d'assistance à la conduite, et/ou de commande du véhicule en mode de conduite autonome ou semi-autonome.

Ainsi, dans ce mode de réalisation, le calculateur 5 acquiert une image captée par la caméra 24 et réalise un diagnostic en fonction de cette image, par reconnaissance d'un pattern d'image, représentative de l'état de l'ensemble des capteurs 6 associés au dispositif d'échantillonnage 2.

À cet effet, le calculateur 5 met en œuvre un procédé de reconnaissance d'image, en particulier par la mise en œuvre de procédés d'apprentissage automatiques, tels que des réseaux de neurones, entraînés préalablement sur la base d'images associées à un diagnostic particulier.

En effet, chaque image affichée par l'afficheur lumineux 21 forme un pattern visuel permettant de visuellement poser un diagnostic, sans avoir à effectuer une analyse capteur par capteur. En ce sens les réseaux de neurones, et les procédés d'apprentissage automatique en général son particulièrement adaptés à la reconnaissance de pattern.

Une telle solution permet d'une part d'acquérir en parallèle un statut de l'ensemble des capteurs, et d'effectuer des diagnostics complexes, en particulier lorsque la combinaison de plusieurs données de capteurs sont nécessaires pour poser le diagnostic.

Une telle solution permet également au calculateur d'obtenir en temps réel, en particulier pendant un roulage, un statut de l'ensemble des capteurs, et ainsi envoyer sans délai une information au conducteur ou assister un conducteur dans sa conduite ou commander un organe du véhicule en mode de conduite autonome ou semi-autonome.

Selon une alternative de mise en œuvre, le procédé de reconnaissance d'image est un procédé traditionnel de traitement de l'image, séparant chaque pixel et calculant alors pour chaque pixel chaque valeur de capteur associée. Toutefois, une telle solution peut être plus coûteuse en temps de calcul et plus sensible à des erreurs d'acquisition.

Toute autre technique de traitement d'image apte à détecter dans l'image acquise par la caméra 21 les valeurs de chaque capteur 6 peut être mise en œuvre par l'homme du métier.

Puis le calculateur 5 transmet le résultat à un afficheur de diagnostic 7, permettant à un opérateur ou au conducteur du véhicule de prendre connaissance du diagnostic réalisé.

L'afficheur de diagnostic 7 peut être combiné avec le calculateur 5, par exemple tel que représenté à la figure 1, ou séparé du calculateur; par exemple en étant intégré au boîtier 4, ou encore disposé à l'extérieur du boîtier tel que représenté figure 2.

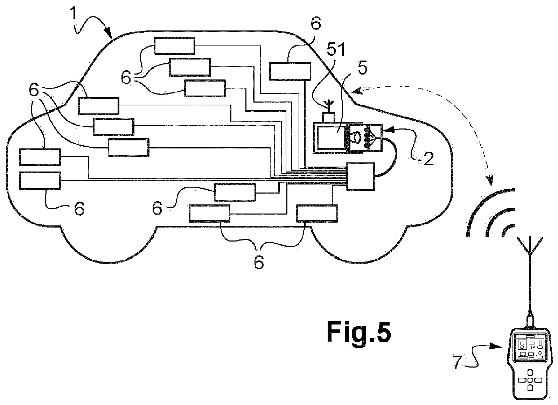

Dans le cas où l'afficheur de diagnostic 7 et le calculateur 5 sont séparés, ils peuvent communiquer soit de manière filaire l'un avec l'autre, soit de manière sans fil, tel que représenté figure 5, par exemple par une communication radiofréquence, telle que du Wifi ou une connexion Bluetooth.

Par ailleurs les données transmises par le calculateur 5 peuvent aussi être transmises à un serveur distant, par exemple par une connexion cellulaire, de sorte à transmettre à distance des informations diagnostiques du véhicule automobile.

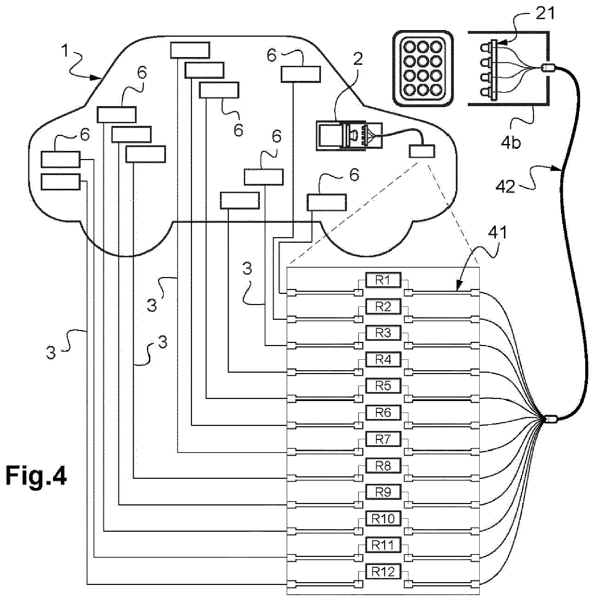

Selon un deuxième mode de réalisation de l'invention en référence à la figure 4, une carte d'adaptation 41 est disposée entre les câbles 3 de sortie des capteurs 6, formant nappe de câbles 3, et l'afficheur lumineux 21.

Cette carte d'adaptation 41, permet d'une part de regrouper en amont de la deuxième partie 4b du boîtier, l'ensemble des câbles 3, et permet en outre de procéder à l'adaptation de la tension, ou le cas échéant du courant, entre la tension de sortie de chaque capteur 6 et la plage de tension d'affichage des LED 210 de l'afficheur 21.

Une telle adaptation, par exemple une augmentation ou une réduction de la tension de sortie du capteur 6 peut être nécessaire pour s'adapter à la tension de commande attendue par chaque LED 210, par exemple par ajout d'une résistance prédéterminée entre la sortie du capteur 6 et la LED 210 associée.

Une autre nappe 42 connecte alors la sortie de la carte d'adaptation 41 à l'afficheur lumineux 21.

L'invention telle que décrite n'est pas limitée à cette seule implémentation et peut être mise en œuvre dans des domaines techniques distincts des véhicules automobiles.

Le fait d'acquérir et de traiter les capteurs via une reconnaissance d'image permet premièrement d'acquérir un grand nombre de sorties de capteurs en parallèle, réduisant de manière importante, et proportionnelle au nombre de capteur, le temps d'acquisition, comparé à une acquisition par multiplexage.

En outre, l'invention permet d'isoler les sorties des capteurs des circuits électrique du véhicule automobile 1.

## Revendications

1. Dispositif (2) d'échantillonnage des données d'une pluralité de capteurs (6) d'un véhicule automobile (1), **caractérisé en ce qu'**il comprend une boîte (4) dans lequel est monté un afficheur lumineux (21) comprenant une matrice d'éléments lumineux (210), chaque élément lumineux (210) dudit afficheur lumineux (21) étant adapté pour être associé à un capteur (6) du véhicule automobile (1); le dispositif (2) comprenant en outre une caméra (24) installée de sorte à acquérir en temps-réel l'image dudit afficheur lumineux (21) installé dans la boîte (4).

2. Dispositif (2) selon la revendication 1 **caractérisé en ce que** chaque élément lumineux (210) comprend une diode électroluminescente commandée en tension ou en courant en fonction respectivement de la valeur de tension ou de courant de sortie dudit capteur (6) associé.

3. Dispositif (2) selon la revendication 1 ou 2, **caractérisé en ce que** ladite boîte (4) est formée de deux parties (4a, 4b) amovibles l'une par rapport à l'autre, une première partie (4a) comprenant l'afficheur lumineux (21) et l'autre partie (4b) comprenant la caméra (24).

4. Dispositif (2) selon l'une quelconque des revendications 1 à 3, **caractérisé en ce qu'**il comprend en outre un organe d'adaptation (41) apte à adapter, pour chaque capteur (6), la tension ou le courant de sortie du capteur (6) à une plage de tension attendue pour l'élément lumineux (210) associé de l'afficheur lumineux (21).

5. Dispositif (2) selon l'une quelconque des revendications 1 à 4, **caractérisé en ce que** chaque capteur (6) est associé à une pluralité d'éléments lumineux (210).

6. Ensemble de diagnostic d'un véhicule automobile, comprenant un dispositif (2) selon l'une quelconque des revendications 1 à 3, et un organe de traitement (5) apte à recevoir en temps-réel l'image dudit afficheur lumineux (21) acquise par ladite caméra (24) et à reconnaître un pattern de diagnostic dans ladite image reçue.

7. Ensemble de diagnostic selon la revendication 6, **caractérisé en ce que** l'organe de traitement (5) comprend des moyens d'apprentissage automatique, tel qu'un réseau de neurones.

8. Ensemble de diagnostic selon la revendication 6 ou 7, **caractérisé en ce qu'**il comprend en outre un afficheur de diagnostic apte à recevoir de l'organe de traitement (5) le diagnostic déterminé et à l'afficher.

9. Utilisation d'un ensemble de diagnostic selon l'une quelconque des revendications 6 à 8 sur un véhicule automobile.
